# EUROPÄISCHE PATENTANMELDUNG

(11) **EP 3 045 419 A1**
(43) Veröffentlichungstag der Anmeldung: **20.07.2016**
(21) Anmeldenummer: 15151312.4
(22) Anmeldetag: 15.01.2015
(51) Int. Cl.: B66D 5/34, B66D 5/24

(54) **Sicherheitsbremse für ein Hubwerk**

(71) Anmelder: Siemens Aktiengesellschaft, 80333 München (DE)
(72) Erfinder: Heil, Rüdiger, 63773 Goldbach (DE); Staub, Eugen, 63825 Sommerkahl (DE); Hoermann, Walfried, 63825 Schöllkrippen (DE)

(57) **Zusammenfassung**

Die Erfindung betrifft ein Verfahren und eine Sicherheitsbremse für ein Hubwerk, wobei zur Betätigung einer Sperrklinke ein Hubmagneten oder ein anderer elektromechanischen Aktor (**A**) eingesetzt wird, wobei die jeweilige Stellung der Sperrklinke mit zumindest drei Schaltern bzw. Sensoren (**S1**, **S2**, **S3**) überwacht wird, und wobei mittels einer sicherheitsgerichteten Steuerung und zumindest einem Sensor die Senkbewegung der Last bzw. des Hubwerks überwacht wird und im Fehlerfall die Sicherheitsbremsung ausgelöst wird. Dabei ist der Hubmagnet bzw. die Sperrklinke (**SK**) so angeordnet, dass durch Federkraft und/oder durch Schwerkraft die Sperrklinke dann in Eingriff gebracht wird, wenn der Aktor, beispielsweise der Hubmagnet, stromlos bzw. "energielos" geschaltet wird. Durch diese Sicherheitsbremse ist es möglich, die Grenzgeschwindigkeit, bei deren Überschreiten die Sicherheitsbremse auslösen soll, exakt zu definieren und zu überwachen. Durch den Einsatz der drei Sensoren (**S1**, **S2**, **S3**), z.B. Schalter, ist es überdies möglich, mittels der Steuerung die Funktion und die Bewegung der Sperrklinke zu überwachen und ungewünschte Betriebszustände zu erkennen, beispielsweise in den Fällen, in denen die Sicherheitsbremse im Eingriff ist und der Antrieb des Hubwerks die Last weiter absenken möchte.

## Beschreibung

Die Erfindung betrifft eine Sicherheitsbremse für ein Hubwerk gemäß dem Oberbegriff des Patentanspruchs 1, und ein Verfahren für eine Sicherheitsbremse für ein Hubwerk gemäß dem Oberbegriff des Patentanspruchs 11.

Zum Heben und Senken von Lasten werden häufig elektrisch oder hydraulisch angetriebene Hubwerke eingesetzt, wobei regelmäßig mindestens ein drehender Antrieb vorgesehen ist, der über ein Seil oder eine andere mechanische Konstruktion, beispielsweise mittels eines Scherentriebs, das Heben bzw. das Senken der Last bewerkstelligt.

Zum Schutz von Personen und Material ist oft gefordert, dass ein Hubwerk mit einer Sicherheitsbremse ausgestattet ist. Eine solche Sicherheitsbremse soll bei gefährlichen Betriebszuständen, insbesondere bei einer unzulässig hohen Absenkgeschwindigkeit der Last, die Last abbremsen und zum Stillstand bringen. Eine solche unbeabsichtigte Bewegung kann beispielsweise bei einer nicht vorgesehenen Unterbrechung der Energieversorgung, bei Versagen eines Antriebselements oder einer Betriebsbremse, oder aus anderen Gründen eintreten.

Wesentlich ist, dass die Sicherheitsbremse, die gelegentlich auch als "Fangbremse" bezeichnet wird, unabhängig von der Betriebsbremse ist. D.h., dass die Sicherheitsbremse auch dann funktionieren muss, wenn die Betriebsbremse ausfällt.

Die Druckschrift DE 101 48 408 C1 - Hoffmann "Sicherheitsbremse für einen Elektrokettenzug" zeigt eine gebräuchliche Anordnung, bei der eine Antriebswelle eines Hubwerks (hier: Elektrokettenzug) mit einem Bremsring ausgestattet ist, also einer reibbasierten Verzögerungseinrichtung. Der Bremsring ist mit einer Bremssperrzahnscheibe verbunden, in die im Fall einer Sicherheitsverzögerung eine Sperrklinke einrastet. Um die Sperrklinke zu betätigen, ist eine Fliehkrafteinrichtung vorgesehen, die mit dem Antrieb verbunden ist. Im Fall eines Versagens der Betriebsbremse oder einer aus anderen Gründen vorliegenden überhöhten Senkgeschwindigkeit des Hubwerks wird dann die Sperrklinke zum Eingriff in die Bremssperrzahnscheibe gebracht und das Hubwerk bzw. die Last des Hubwerks dadurch abgebremst und zum Stillstand gebracht.

Die aus dem Stand der Technik bekannte Anordnung hat den Nachteil, dass aufgrund der Fliehkraft-gesteuerten Auslösung der Sicherheitsbremse ein erheblicher Geschwindigkeitsunterschied zwischen dem betriebsgemäßen Absenken der Last und der Absinkgeschwindigkeit im Fehlerfall bestehen muss, um sicher zwischen einer regulären Absenkung der Last und einer Fehlfunktion unterscheiden zu können. Ein weiterer Nachteil besteht darin, dass ein Test der Fliehkrafteinrichtung nur dadurch erfolgen kann, dass eine Last oder eine Probe-Absenkung des Hubwerks mit sehr hoher Geschwindigkeit erfolgt. Somit ist ein Test der Fliehkrafteinrichtung und damit der Sicherheitsbremse mit hohen Lastspitzen und einer entsprechenden Belastung der Mechanik verbunden. Neueste Sicherheitsvorschriften für besonders kritische Einsatzfälle führen überdies dazu, dass für Sicherheitsbremsen gemäß dem geschilderten Stand der Technik Probleme bei einer Zertifizierung auftreten können.

Es ist daher eine Aufgabe der vorliegenden Erfindung, eine Sicherheitsbremse für ein Hubwerk vorzuschlagen, die zuverlässig arbeitet, präzise einstellbar ist und deren Funktion ohne verschleißbehaftete und aufwändige Prüfungen überwacht werden kann.

Es ist eine Kernidee der Lösung der erfindungsgemäßen Aufgabe, anstelle des aus dem Stand der Technik bekannten mechanischen Fliehkraftschalters zur Betätigung der Sperrklinke einen Hubmagneten oder einen anderen elektromechanischen Aktor einzusetzen, wobei die jeweilige Stellung der Sperrklinke mit zumindest drei Schaltern bzw. Sensoren überwacht wird, und wobei mittels einer sicherheitsgerichteten Steuerung und zumindest einem Sensor die Senkbewegung der Last bzw. des Hubwerks überwacht wird und im Fehlerfall die Sicherheitsbremsung ausgelöst wird. Dabei ist der Hubmagnet bzw. die Sperrklinke so angeordnet, dass durch Federkraft und/oder durch Schwerkraft die Sperrklinke dann in Eingriff gebracht wird, wenn der Aktor, beispielsweise der Hubmagnet, stromlos bzw. "energielos" geschaltet wird. Solche Anordnungen sind auch für Hubtische vorteilhaft einsetzbar, die derzeit mit sog. Fangzylindern (Verdrängungspuffer) abgesichert werden, deren Betätigung jedoch auch im Regelbetrieb hohe Kräfte und damit Verluste mit sich bringen und/oder die Bewegungsstrecke des Hubwerkes einschränken. Während bei drehenden Antrieben wie in der Druckschrift DE 101 48 408 C1 die Sperrklinke mit einer sich mitdrehenden Bremssperrzahnscheibe als Bremssperrzahnelement zusammenwirkt, kann bei Hubtischen und anderen linearen Anwendungen als Bremssperrzahnelement eine Zahnstange (Bremssperrzahnstange) eingesetzt werden, womit eine Umsetzung der linearen in eine rotierende Bewegung entfällt.

Die Aufgabe wird insbesondere durch eine Sicherheitsbremse gemäß dem Patentanspruch 1 und durch ein Verfahren gemäß dem Patentanspruch 11 gelöst.

Dabei ist eine Sicherheitsbremse für ein Hubwerk vorgesehen, wobei mit einem Antrieb des Hubwerks ein Bremssperrzahnelement, insbesondere eine Bremssperrzahnscheibe oder eine Bremssperrzahnstange, verbunden ist, und wobei eine Sperrklinke zum Eingriff in einen Klinkenfreiraum des Bremssperrzahnelementes im Falle einer unzulässigen Senkgeschwindigkeit des Hubwerks vorgesehen ist, wobei das Bremssperrzahnelement blockiert. Dabei ist ein Aktor zur Betätigung der Sperrklinke vorgesehen, wobei die Sperrklinke und der Aktor derart ausgebildet und angeordnet sind, dass in einem energielosen Zustand des Aktors die Sperrklinke an dem Bremssperrzahnelement anliegt oder in den Klinkenfreiraum des Bremssperrzahnelementes einrückt, und in einem energiebehafteten Zustand des Aktors die Sperrklinke von dem Bremssperrzahnelement wegrückt oder aus dem Klinkenfreiraum ausrückt und das Bremssperrzahnelement freigibt, wobei eine elektronische oder numerische Steuerung zur Steuerung des Antriebs und zur Betätigung des Aktors vorgesehen ist, wobei die Steuerung zur Überwachung einer Absenkgeschwindigkeit des Hubwerks eingerichtet ist und bei Überschreiten einer zulässigen Absenkgeschwindigkeit eine Überführung des Aktors in den energielosen Zustand vorgesehen ist, und wobei zumindest 3 mit der Steuerung verknüpfte Sensoren zur Ermittlung eines Betriebszustandes der Sperrklinke vorgesehen sind, wobei mittels der Sensoren bezüglich des Betriebszustandes zumindest zwischen dem weggerücktem Zustand, dem anliegendem Zustand, und dem vollständig in den Klinkenfreiraum eingerücktem Zustand unterschieden werden kann. Durch diese Sicherheitsbremse ist es möglich, die Grenzgeschwindigkeit, bei deren Überschreiten die Sicherheitsbremse auslösen soll, exakt zu definieren und zu überwachen. Durch den Einsatz der drei Sensoren, z.B. Schalter, ist es überdies möglich, mittels der Steuerung die Funktion und die Bewegung der Sperrklinke zu überwachen und ungewünschte Betriebszustände zu erkennen, beispielsweise in den Fällen, in denen die Sicherheitsbremse im Eingriff ist und der Antrieb des Hubwerks die Last weiter absenken möchte.

Die Aufgabe wird weiterhin durch ein Verfahren für eine Sicherheitsbremse für ein Hubwerk gelöst, wobei mit einer Antriebswelle des Hubwerks ein Bremssperrzahnelement verbunden ist, und wobei eine Sperrklinke in einen Klinkenfreiraum des Bremssperrzahnelementes im Falle einer unzulässigen Senkgeschwindigkeit des Hubwerks eingreift, wobei das Bremssperrzahnelement blockiert wird. Dabei ist ein Aktor zur Betätigung der Sperrklinke vorgesehen, wobei in einem energielosen Zustand des Aktors die Sperrklinke an das Bremssperrzahnelement angedrückt oder in den Klinkenfreiraum des Bremssperrzahnelementes eingerückt wird, und in einem energiebehafteten Zustand des Aktors die Sperrklinke von dem Bremssperrzahnelement weggerückt oder aus dem Klinkenfreiraum ausgerückt und das Bremssperrzahnelement freigegeben wird, wobei durch eine elektronische oder numerische Steuerung eine Betätigung des Aktors erfolgt, wobei durch die Steuerung eine Absenkgeschwindigkeit des Hubwerks überwacht wird und bei Überschreiten einer zulässigen Absenkgeschwindigkeit der Aktor in den energielosen Zustand versetzt wird, und wobei durch zumindest 3 Sensoren ein jeweiliger Betriebszustand der Sperrklinke erfasst wird, wobei mittels der Sensoren bezüglich des Betriebszustandes zumindest zwischen dem weggerücktem Zustand, dem anliegendem Zustand und dem vollständig in den Klinkenfreiraum eingerücktem Zustand unterschieden wird, und wobei durch die Steuerung die Signale der 3 Sensoren und die erfasste Geschwindigkeit bei der Ansteuerung des Aktors und des Antriebes verwendet werden. Durch dieses Verfahren können die bereits anhand der Vorrichtung erläuterten Vorteile realisiert werden.

Vorteilhafte Ausgestaltungen der Erfindung sind in den abhängigen Patentansprüchen angegeben. Die für die Sicherheitsbremse angegebenen vorteilhaften Ausgestaltungen gelten sinngemäß auch für das erfindungsgemäße Verfahren, und umgekehrt. Die in den abhängigen Patentansprüchen diskutierten vorteilhaften Ausgestaltungen können sowohl einzeln, als auch in beliebiger Kombination miteinander realisiert werden.

In einer bevorzugten Ausgestaltung ist der Aktor ein elektrischer Hubmagnet. Solche Hubmagnete können besonders schnell nach Abschalten der Energieversorgung (Bestromung) die Sperrklinke freigeben, so dass diese getrieben von einer Federkraft und/oder der Schwerkraft in einen Klinkenfreiraum des Bremssperrzahnelementes einrasten kann. Alternativ ist es aber auch möglich, die Sperrklinke pneumatisch oder hydraulisch offen zu halten, wobei dann die Steuerung durch das Ansteuern eines entsprechenden Ventils die Bewegung der Sperrklinke freigeben kann. Wichtig ist jedoch in diesem Zusammenhang, dass diese Verriegelung eigensicher ausgeführt ist, was in diesem Zusammenhang bedeutet, dass im Fall eines Energieausfalls automatisch die sichere Betriebsstellung eingenommen werden muss, also im Fall eines Stromausfalls o.ä. die Sperrklinke selbsttätig in das Bremssperrzahnelement eingreift. Ebenso ist die Steuerung (elektronische oder numerische Steuerung) vorteilhaft redundant oder eigensicher ausgeführt, so dass eine Fehlfunktion immer zu einem Nothalt des Hubwerks führt. Ebenso muss die Funktion des Geschwindigkeitssensors, mit dem die Absenkgeschwindigkeit des Hubwerks überwacht wird, redundant ausgeführt sein und/oder durch eine gesonderte Sicherheitsschaltung überwacht werden.

In einer vorteilhaften Ausgestaltung erfolgt die Überwachung einer Absenkgeschwindigkeit des Hubwerks bzw. der damit bewegten Last mittels eines Seilcodegebers, welches ein gebräuchliches und sehr zuverlässiges Instrument darstellt. Alternativ kann auch mit einer Welle des Antriebs des Hubwerks, beispielsweise mit der Achse, auf die das Bremssperrzahnelement wirkt, ein Drehzahlsensor oder ein Inkrementalgeber oder dgl. zur Erfassung der Geschwindigkeit verbunden sein. In einem solchen Fall ist das Bremssperrzahnelement vorteilhaft als Zahnscheibe (Bremssperrzahnscheibe) ausgestaltet. Es ist in einer vorteilhaften Ausgestaltung auch möglich, zwei völlig unterschiedliche Messeinrichtungen zur gegenseitigen Kontrolle miteinander zu kombinieren, beispielsweise einen Seilcodegeber mit einem Drehsensor, oder einen Radarsensor mit einem lasergestützten Messverfahren, etc.

Vorteilhaft ist die Steuerung derart eingerichtet, dass in einem Regelbetrieb ein Anlegen der Sperrklinke an das Bremssperrzahnelement nur bei stehendem Antrieb des Hubwerks erfolgt. Damit wird Verschleiß an der Sperrklinke verhindert, der beispielsweise beim Heben der Last eintreten könnte, bei dem ein Wegrücken der Sperrklinke von dem Bremssperrzahnelement prinzipbedingt nicht unbedingt erforderlich wäre.

Eine Überprüfung der Funktion der Sperrklinke und insbesondere der drei Sensoren zur Erfassung der jeweiligen Position bzw. des jeweiligen Betriebszustandes der Sperrklinke kann einfach und vor allen Dingen auch materialschonend erfolgen, indem der Aktor bei einem langsamen Senken (Probebetrieb) des Hubwerks bzw. der Last des Hubwerks stromlos bzw. energielos geschaltet wird, wobei sich die Sperrklinke zunächst an das Bremssperrzahnelement anlegen und später auch in das Bremssperrzahnelement einrücken muss. Dies bedeutet, dass bei einem Probebetrieb beim Auslösen des Aktors alle drei Betriebszustände und damit alle drei Sensoren der Sperrklinke umschalten müssen. Darüber hinaus ist es möglich, bei dieser Prüfung bei eingerasteter Sperrklinke und somit stehendem Antrieb das Motor-Drehmoment sukzessive zu erhöhen, um die mechanische Festigkeit der Sperrklinke und das Haltemoment des Bremssperrzahnelementes zu überprüfen. Solche Überprüfungen können materialschonend automatisch in regelmäßigen Abständen durchgeführt werden, beispielsweise einmal täglich oder sogar vor jedem produktiven Einsatz des Hubwerks.

Ein Ausführungsbeispiel einer erfindungsgemäßen Sicherheitsbremse wird nachfolgend anhand der Zeichnungen erläutert. Das Ausführungsbeispiel dient gleichzeitig einer Erläuterung des erfindungsgemäßen Verfahrens.

Dabei zeigen:
- Figur 1: eine schematische Skizze der erfindungsgemäßen Sicherheitsbremse bei einem Heben oder Senken der Last mit zulässiger Geschwindigkeit,
- Figur 2: die Sicherheitsbremse bei einem betriebsmäßigen Stopp des Hubwerks, und
- Figur 3: die Sicherheitsbremse nach dem "Fangfall" bei einem Nothalt des Hubwerks.

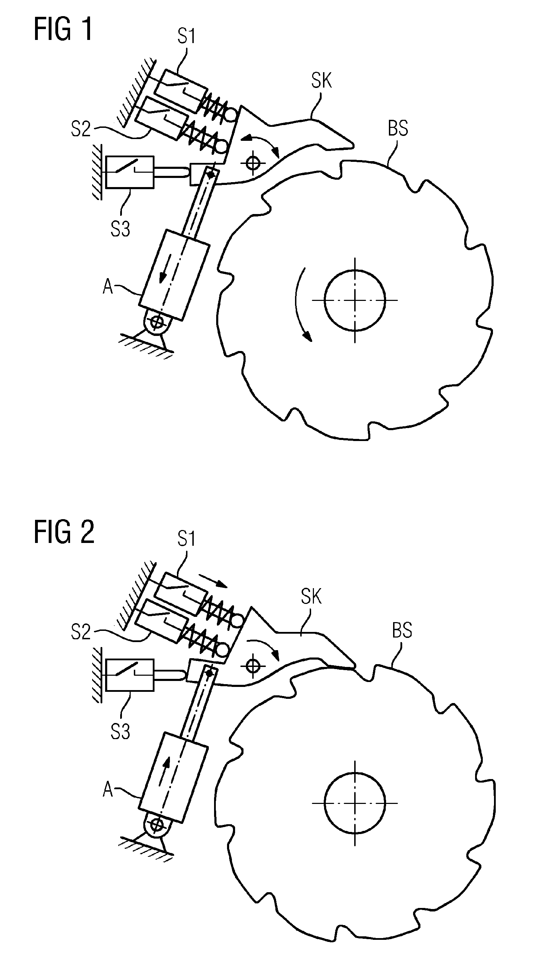

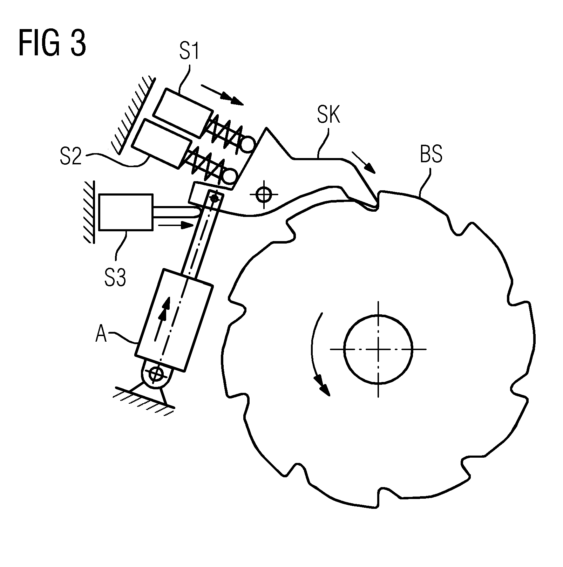

Die Figuren 1, 2 und 3 zeigen jeweils dieselbe Anordnung bei unterschiedlichen Betriebszuständen. Daher gelten die funktionalen Erläuterungen der einzelnen Bauteile und die Bezugszeichen, die anhand der Figur 1 eingeführt werden, sinngemäß auch für die Figuren 2 und 3.

Obwohl in den Figuren ein drehendes Bremssperrzahnelement (Bremssperrzahnscheibe) dargestellt ist, kann in analoger Weise, insbesondere für Hubtische und andere linear arbeitende Hubwerke, das Bremssperrzahnelement als Zahnstange (Bremssperrzahnstange) ausgeführt werden.

In der Figur 1 sind als Bauteile eines Hubwerks ein als Bremssperrzahnscheibe ausgestaltetes und im Folgenden auch als solche bezeichnetes Bremssperrzahnelement BS und die Sperrklinke SK dargestellt, wobei die Sperrklinke SK mit einem Aktor A betätigt wird. Die Sensoren S1, S2 und S3, die im vorliegenden Ausführungsbeispiel als Schalter (Öffner) ausgeführt sind, werden mit Bewegung der Sperrklinke SK betätigt, wobei die Sperrklinke SK schwenkbar gelagert ist. Die Bremssperrzahnscheibe BS ist über einen Bremsring oder ein anderes Reibelement (nicht dargestellt) mit einer Antriebsachse eines Hubwerks (ebenfalls nicht dargestellt) verbunden. Die Bremssperrzahnscheibe BS und das restliche (nicht dargestellte) Hubwerk entsprechen im Wesentlichen dem Stand der Technik, wie er beispielsweise in der Druckschrift DE 101 48 408 C1 erläutert ist; gegenüber diesem Stand der Technik ist jedoch die Sperrklinke SK, deren Betätigung (Aktor A) und die Sensorik (Sensoren S1, S2 und S3) geändert. Ebenfalls gegenüber dem Stand der Technik geändert bzw. zusätzlich vorhanden ist ein (nicht dargestellter) Sensor zu Überwachung der Senkgeschwindigkeit bzw. Lastgeschwindigkeit des Hubwerks.

Im Folgenden sei angenommen, dass die Senkgeschwindigkeit des Hubwerks bzw. der Last mittels eines (nicht dargestellten) Drehzahlsensors an der Drehachse der Bremssperrzahnscheibe BS ermittelt wird. Bezogen auf die Figuren wird bei einer Drehung gegen den Uhrzeigersinn der Bremssperrzahnscheibe BS die Last gesenkt, bei einer Drehung im Uhrzeigersinn wird die Last gehoben.

Die Sensoren S1, S2 und S3 sind mit einer Steuerung des Hubwerks verbunden und geben der Steuerung Auskunft über die Position (Stellung) der Sperrklinke SK. Dabei ist jeder der Sensoren S1, S2, S3 einer von drei möglichen Betriebszuständen (Positionen, Stellungen) der Sperrklinke SK zugeordnet. In alternativen Ausgestaltungen können auch andere Kombinationen von Sensoren verwendet werden, beispielsweise können mehrere Sensoren in einem Bauteil kombiniert sein, oder es kann auch beispielsweise ein einziger "Analoggeber" den Schwenkwinkel der Sperrklinke SK erfassen und an die (nicht dargestellte) Steuerung melden. Aus Gründen der Redundanz bzw. der Fehlerüberwachung bietet es sich jedoch an, drei voneinander unabhängige Sensoren bzw. Schalter einzusetzen, so dass eine Plausibilitätsüberprüfung bzw. Überwachung der Funktion möglich ist.

Im vorliegenden Ausführungsbeispiel ist der Sensor S1 so verschaltet und angeordnet, dass er geschlossen ist, wenn die Sperrklinke SK von der Bremssperrscheibe BS weggerückt ist, d.h., dass auch bei einer Drehung der Bremssperrzahnscheibe BS die Sperrklinke SK nicht mit der Bremssperrzahnscheibe BS in Kontakt ist. Dieser Fall ist in der Figur 1 dargestellt; bei geschlossenem Schalter bzw. Sensor S1 ist der Antrieb des Hubwerks freigegeben, und zwar sowohl für das Heben, als auch für das Senken der Last.

In der Figur 2 ist der "reguläre Stillstand" des Hubwerks dargestellt, wobei der Aktor A die Sperrklinke SK freigibt. Dies bedeutet, dass entgegen der Darstellung in der Figur 1, bei der der Aktor A die Sperrklinke SK von der Bremssperrzahnscheibe BS weggedrückt hat, nun die Sperrklinke SK durch Federkraft (die Federn sind an den Betätigungselementen der Sensoren S1 und S2 dargestellt) zu der Bremssperrzahnscheibe BS hingeschwenkt wird und dort anliegt. Der Sensor S1 ist jetzt geöffnet, was z.B. auch dazu genutzt werden kann, um den Antrieb des Hubwerks stromlos zu schalten. Der Sensor S2, der hier ebenfalls als "Öffner" ausgestaltet ist, hat nun im Gegensatz zu der Darstellung in der Figur 1 geöffnet und übermittelt dadurch der angeschlossenen Steuerung die Information darüber, dass die Sperrklinke SK an der Bremssperrzahnscheibe BS anliegt.

Hierbei sie nochmals angemerkt, dass prinzipiell die Unterscheidung zwischen den Betriebszuständen aus den Figuren 1 und 2 auch durch einen einzigen Schalter bzw. Sensor bewerkstelligt werden kann, dann entfällt jedoch die jetzt mögliche gegenseitige Überwachung der korrekten Funktion der Sensoren S1, S2 und S3. Dies bedeutet, dass die dargestellte Ausführung mit zumindest drei Sensoren bzw. Schaltern die Sicherheit des Systems erhöht bzw. eine Fehlererkennung ermöglicht.

Wegen der besonderen Ausgestaltung der Bremssperrzahnscheibe BS, wobei der Klinkenfreiraum eine Vertiefung in tangentialer Richtung aufweist, taucht die Sperrklinke SK nur dann vollständig in den Klinkenraum der Bremssperrzahnscheibe BS ein ("eingerückter Zustand"), wenn bei anliegender Sperrklinke SK gemäß der Darstellung in der Figur 2 eine weitere Senkbewegung (Drehbewegung der Bremssperrzahnscheibe BS gegen den Uhrzeigersinn) stattfindet. Dieser Zustand ist in der Figur 3 dargestellt.

Der in der Figur 3 dargestellte Zustand kann also nur dann eintreten, wenn ein Absenken der Last bzw. des Hubwerks bei energielosem Betriebszustand des Aktors A erfolgt ist, was im Regelbetrieb des Hubwerks nicht vorgesehen ist. Dies bedeutet, dass der in der Figur 3 dargestellte Zustand nur im "Fangfall" eintreten kann, also bei einem Einrücken oder Einrasten der Sperrklinke SK während eines Senkbetriebs. Dabei ist die schwenkbare Sperrklinke SK gegenüber dem Zustand gemäß der Figur 2 weiter in die Richtung der Drehachse der Bremssperrzahnscheibe BS verschwenkt, was durch ein Betätigen (Öffnen) des Sensors S3 (öffnender Schalter) detektiert wird. Dadurch bekommt die angeschlossene Steuerung die Information, dass der "Fangfall" eingetreten ist, was beispielsweise dazu genutzt werden kann, den Antrieb stillzulegen ("Nothalt"), Alarm auszulösen oder dgl.

Bei einem planmäßigen (Regelbetrieb) Heben der Last bzw. des Hubwerks wird der Aktor A betätigt, d.h., in diesem Beispiel, dass der Hubmagnet "bestromt" wird. Dadurch wird die Sperrklinke SK von der Bremssperrzahnscheibe BS weggeschwenkt. Dieser Zustand ist in der Figur 1 dargestellt. Der Hubantrieb kann eingeschaltet und die Betriebsbremse (sofern vorhanden) gelöst werden. Gleiches gilt für das planmäßige Senken der Last. Im Ruhezustand ("Hubwerk steht") ist sowohl der Antrieb, als auch der Aktor A stromlos. Eine ggf. vorhandene Betriebsbremse ist im Eingriff. Die Sperrklinke SK legt sich an die Verzahnung der Bremssperrzahnscheibe BS an (Figur 2), rückt aber nicht vollständig in einen Klinkenfreiraum der Bremssperrzahnscheibe BS ein.

Sollte nun ein Versagen der Betriebsbremse eintreten oder aus einem anderen Grund ungewollt die Last weiter sinken, rastet die Sperrklinke SK in den nächstliegenden Klinkenfreiraum vollständig ein und blockiert damit die Bremssperrzahnscheibe BS. Das Hubwerk bzw. die Last ist gegen weiteres Senken gesichert. Der Sensor S3 ist betätigt und verhindert, dass der Antrieb durch einen regulären Bedienvorgang eingeschaltet werden kann. Allerdings kann in dieser Position (Figur 3) der Antrieb auf "Heben" geschaltet werden, um die Sperrklinke SK frei zu fahren, so dass der Zustand aus der Figur 2 wieder erreicht werden kann und danach ein vollständiges Wegrücken (Figur 1) der Sperrklinke SK durch den Aktor A durchgeführt werden kann. Analog zu dem geschilderten Fall eines Versagens der Betriebsbremse im Ruhezustand des Hubwerks wird auch im Fall eines Versagens des Hubwerks im laufenden Betrieb, also bei weggerücktem Zustand der Sperrklinke SK gemäß der Darstellung in der Figur 1, der Aktor A gelöst bzw. "stromlos" geschaltet. Dies kann beispielsweise durch die Steuerung initiiert werden, wenn durch einen (nicht dargestellten) Drehzahl- oder Geschwindigkeitssensor ein Überschreiten der zulässigen Absenkgeschwindigkeit der Last bzw. Senkdrehzahl einer Antriebswelle des Hubwerks detektiert wird. Gleiches gilt für den Fall eines Ausfalls der Energieversorgung oder dgl. Dann legt sich zunächst die Sperrklinke SK an die Bremssperrzahnscheibe BS an (Figur 2) und rastet wenig später vollständig in einen Klinkenfreiraum ein, so dass das Bremselement der Bremssperrzahnscheibe BS die Achse, Seiltrommel oder dgl. verzögern und abbremsen kann.

Insbesondere durch den Einsatz von drei Sensoren S1, S2 und S3 und durch eine automatische (Federkraft und/oder Gewichtskraft) Betätigung der Sperrklinke SK im energielosen Zustand ist ein sicherer Betrieb der Sicherheitsbremse gegeben. Je nach erforderlicher Ausfallsicherheit (Sicherheitsklasse) können oder sollen wesentliche Elemente der Lösung, insbesondere die Steuerung und die Sensoren zur Erfassung der Geschwindigkeit der Last, redundant ausgeführt sein oder permanent überwacht werden ("fehlersicher"). Die dargestellte Lösung ermöglicht es, die Auslösegeschwindigkeit exakt einzuhalten.

Die dargestellte Lösung ermöglicht es außerdem, die korrekte Funktion der Sperrklinke SK durch nicht-destruktive Testläufe zu überwachen, wobei das Hubwerk in eine langsame Senkbewegung versetzt wird und der Aktor A stromlos geschaltet wird, wobei mittels der Sensoren S1, S2 und S3 nacheinander alle drei geschilderten Betriebszustände der Sperrklinke SK detektiert werden müssen. Im Betriebszustand gemäß der Figur 3, bei der die Bremssperrzahnscheibe BS im Senkbetrieb blockiert ist, kann dann weiterhin sukzessive das Motormoment für die Senkbewegung erhöht werden, bis ein Nennmoment erreicht wird oder bis das Bremselement an der Bremssperrzahnscheibe BS beginnt, durchzurutschen. Letzteres kann mit dem Seilcodegeber, Drehgeber oder dgl. überwacht werden. Auf diese Weise ist es möglich, anhand des dabei vom Antrieb aufgenommenen Stromes das Haltemoment der Bremsung zu ermitteln und dabei festzustellen, ob der dabei ermittelte Wert innerhalb eines vorgeschriebenen Sollbereichs liegt. Beide Tests, also sowohl der Test der Sensoren S1, S2, S3, als auch der Test der Bremseinrichtung, können sowohl manuell ausgelöst werden, als auch automatisch in regelmäßigen Zeitabständen von dem Hubwerk durchgeführt werden. Selbstverständlich werden die Testergebnisse durch die Steuerung ausgewertet und entsprechend visualisiert oder dokumentiert, wobei vorgesehen sein kann, dass sich das Hubwerk bei Fehlfunktion oder Unplausibilitäten selbsttätig stilllegt.

## Patentansprüche

1. Sicherheitsbremse für ein Hubwerk,
wobei mit zumindest einem Antrieb des Hubwerks ein Bremssperrzahnelement (BS) verbunden ist, und
wobei eine Sperrklinke (SK) zum Eingriff in einen Klinkenfreiraum des Bremssperrzahnelementes (BS) im Falle einer unzulässigen Senkgeschwindigkeit des Hubwerks vorgesehen ist, wobei das Bremssperrzahnelement (BS) blockiert ist,
**dadurch gekennzeichnet,**
**dass** ein Aktor (A) zur Betätigung der Sperrklinke (SK) vorgesehen ist, wobei die Sperrklinke (SK) und der Aktor (A) derart ausgebildet und angeordnet sind, dass in einem energielosen Zustand des Aktors (A) die Sperrklinke (SK) an dem Bremssperrzahnelement (BS) anliegt oder in den Klinkenfreiraum des Bremssperrzahnelementes (BS) einrückt, und in einem energiebehafteten Zustand des Aktors (A) die Sperrklinke (SK) von dem Bremssperrzahnelement (BS) wegrückt oder aus dem Klinkenfreiraum ausrückt und das Bremssperrzahnelement (BS) freigibt, dass eine elektronische oder numerische Steuerung zur Steuerung des Antriebs und zur Betätigung des Aktors (A) vorgesehen ist, wobei die Steuerung zur Überwachung einer Absenkgeschwindigkeit des Hubwerks eingerichtet ist und bei Überschreiten einer zulässigen Absenkgeschwindigkeit eine Überführung des Aktors (A) in den energielosen Zustand vorgesehen ist, und
**dass** zumindest 3 mit der Steuerung verknüpfte Sensoren (S1, S2, S3) zur Ermittlung eines Betriebszustandes der Sperrklinke (SK) vorgesehen sind, wobei mittels der Sensoren (S1, S2, S3) bezüglich des Betriebszustandes zumindest zwischen dem weggerücktem Zustand, dem anliegendem Zustand, und dem vollständig in den Klinkenfreiraum eingerücktem Zustand unterschieden werden kann.

2. Sicherheitsbremse nach Patentanspruch 1,
**dadurch gekennzeichnet,**
**dass** der Aktor (A) ein elektrischer Hubmagnet ist.

3. Sicherheitsbremse nach einem der vorhergehenden Patentansprüchen,
**dadurch gekennzeichnet,**
**dass** der Klinkenfreiraum des Bremssperrzahnelementes (BS) derart ausgestaltet ist, dass die Sperrklinke (SK) nur bei einem Absenken des Hubwerks bei an dem Bremssperrzahnelement (BS) anliegender Speerklinke vollständig in den Klinkenfreiraum einrückt.

4. Sicherheitsbremse nach einem der vorhergehenden Patentansprüchen,
**dadurch gekennzeichnet,**
**dass** die Steuerung zur Betätigung des Antriebs des Hubwerks vorgesehen ist, wobei die Steuerung derart eingerichtet ist, dass in einem Regelbetrieb ein Absenken des Hubwerks nur im energiebehaftetem Zustand des Aktors (A) erfolgt.

5. Sicherheitsbremse nach Patentanspruch 4,
**dadurch gekennzeichnet,**
**dass** die Steuerung derart eingerichtet ist, dass in einem Regelbetrieb ein Anlegen der Sperrklinke (SK) an das Bremssperrzahnelement (BS) nur bei stehendem Antrieb des Hubwerk erfolgt.

6. Sicherheitsbremse nach einem der vorhergehenden Patentansprüchen,
**dadurch gekennzeichnet,**
**dass** zur Überwachung einer Absenkgeschwindigkeit des Hubwerks ein Seilcodegeber, der mit dem Hubwerk verbunden ist, oder ein Drehzahlsensor, der mit dem Antrieb des Hubwerk verbunden ist, vorgesehen ist.

7. Sicherheitsbremse nach Patentanspruch 6,
**dadurch gekennzeichnet,**
**dass** der Seilcodegeber oder der Drehzahlsensor fehlersicher oder redundant ausgeführt ist.

8. Sicherheitsbremse nach einem der vorhergehenden Patentansprüchen,
**dadurch gekennzeichnet,**
**dass** die Steuerung fehlersicher oder redundant ausgestaltet ist.

9. Sicherheitsbremse nach einem der vorhergehenden Patentansprüchen,
**dadurch gekennzeichnet,**
**dass** ein Testlauf zum Test der zumindest 3 Sensoren (S1, S2, S3) vorgesehen ist, wobei vorgesehen ist, das Hubwerk bei energielosem Aktor (A) abzusenken, wobei der Aktor (A) energielos geschaltet wird, und wobei vorgesehen ist, die Signale der Sensoren (S1, S2, S3) beim Anlegen und beim Einrücken der Sperrklinke (SK) zu verifizieren.

10. Sicherheitsbremse nach einem der vorhergehenden Patentansprüchen,
**dadurch gekennzeichnet,**
**dass** zumindest einer der 3 Sensoren (S1, S2, S3) als Schalter ausgeführt ist.

11. Verfahren für eine Sicherheitsbremse für ein Hubwerk,
wobei mit einem Antrieb des Hubwerks ein Bremssperrzahnelement (BS) mittelbar oder unmittelbar verbunden ist, und
wobei eine Sperrklinke (SK) in einen Klinkenfreiraum des Bremssperrzahnelementes (BS) im Falle einer unzulässigen Senkgeschwindigkeit des Hubwerks eingreift, wobei das Bremssperrzahnelement (BS) blockiert wird, **dadurch gekennzeichnet,**
**dass** ein Aktor (A) zur Betätigung der Sperrklinke (SK) vorgesehen ist, wobei in einem energielosen Zustand des Aktors (A) die Sperrklinke (SK) an das Bremssperrzahnelement (BS) angedrückt oder in den Klinkenfreiraum des Bremssperrzahnelementes (BS) eingerückt wird, und in einem energiebehafteten Zustand des Aktors (A) die Sperrklinke (SK) von dem Bremssperrzahnelement (BS) weggerückt oder aus dem Klinkenfreiraum ausgerückt und das Bremssperrzahnelement (BS) freigegeben wird,
**dass** durch eine elektronische oder numerische Steuerung eine Betätigung des Aktors (A) erfolgt, wobei durch die Steuerung eine Absenkgeschwindigkeit des Hubwerks überwacht wird und bei Überschreiten einer zulässigen Absenkgeschwindigkeit der Aktor (A) in den energielosen Zustand versetzt wird ist, und
**dass** durch zumindest 3 Sensoren (S1, S2, S3) ein jeweiliger Betriebszustand der Sperrklinke (SK) erfasst wird, wobei mittels der Sensoren (S1, S2, S3) bezüglich des Betriebszustandes zumindest zwischen dem weggerücktem Zustand, dem anliegendem Zustand, und dem vollständig in den Klinkenfreiraum eingerücktem Zustand unterschieden wird, und wobei durch die Steuerung die Signale der 3 Sensoren (S1, S2, S3) und die erfasste Geschwindigkeit bei der Ansteuerung des Aktors (A) und des Antriebes verwendet werden.

12. Verfahren nach Patentanspruch 11,
**dadurch gekennzeichnet,**
**dass** in einem Regelbetrieb durch die Steuerung bei Feststellung eines Überschreitens der zulässigen Absenkgeschwindigkeit und/oder bei Detektion des anliegenden Zustandes oder des vollständig in den Klinkenfreiraum eingerücktem Zustandes der Sperrklinke (SK) eine Senkbewegung des Antriebes abgeschaltet wird.

13. Verfahren nach Patentanspruch 11 oder 12,
**dadurch gekennzeichnet,**
**dass** ein Testlauf zum Test der zumindest 3 Sensoren (S1, S2, S3) durchgeführt wird, wobei durch die Steuerung der Antrieb des Hubwerk bei energielosem Aktor (A) in den Senkbetrieb geschaltet wird, wobei der Aktor (A) in den energielosen Zustand geschaltet wird, wobei die Funktion der 3 Sensoren (S1, S2, S3) beim Anlegen und beim Einrücken der Sperrklinke (SK) verifiziert wird.
